# EUROPEAN PATENT APPLICATION

(11) **EP 1 767 089 A1**
(43) Date of publication of application: **28.03.2007**
(21) Application number: 06120193.5
(22) Date of filing: 06.09.2006
(51) Int. Cl.: A01M 3/04, A01M 1/14

(54) **Device for capturing insects**

(30) Priority: 27.09.2005 IT PD20050072 U
(71) Applicant: MULTITECNO S.r.l., 30025 Fossalta Di Portogruaro (Prov. of Venezia) (IT)
(72) Inventor: Reatti, Guido, 35128, Padova (IT)
(74) Representative: Modiano, Micaela Nadia

(57) **Abstract**

A device for capturing insects of the type that works by adhesion to a sticky surface. The device (10) comprises a multilayer pack (11) of films (12), the two end films (12a, 12b) of which are respectively a first one (12a) suitable to be arranged in contact with a support (13) and a second one (12b) provided with a surface which is free to the environment. Each film (12) of the multilayer pack (11) comprises, on the side directed toward the second end film (12b), a sticky surface (15) for capturing insects and, on the opposite side, a surface (16) for weak adhesion to the sticky surface (15) of a contiguous film (12). Each film (12) has, at at least one edge, a user grip portion (18) which is at least partially free from contiguous films (12). The grip portion (18) is suitable for peeling the end film (12b) that is directed toward the environment with respect to the rest of the multilayer pack (11).

## Description

The present invention relates to a device for capturing insects.

Apparatuses with a so-called fly-killer lamp are known among apparatuses for eliminating insects.

Substantially two models of this type of apparatus are used: the apparatus with a fly-killing lamp and an electrified mesh and the apparatus with a fly-killing lamp provided with interchangeable sticky surfaces.

The first model, which is now no longer widely used, consists in practice of an electrified mesh which surrounds the UVA ray lamp and electrocutes the insect which, being attracted by the lamp, strikes said mesh.

The second model consists of a panel which is arranged below the lamp and on which glue is deposited.

The insects, attracted by the lamp, rest on the panel and remain stuck to it.

The panel is interchangeable, since its adhesive power lasts between 30 and 60 days (with the adhesives currently in use).

The adhesive effect of the glue is in fact weakened over time mainly due to the phenomenon of drying caused by UVA rays.

Further, in the case of environments with a high level of infestation and therefore with a large number of captures of insects by the panel, the available adhesive surface fills completely even in a short time (typically 15 days).

Therefore, this second model requires continuous interventions for replacement at short time intervals, with an obvious commitment of labor.

This commitment is particularly felt in supermarkets and in industrial facilities of the food sector, where the presence of insects is particularly intense and harmful.

The problem is particularly important in warm seasons, when the insect population fluctuates greatly.

It is therefore necessary to have adequate reserves of panels in order to be able to replace promptly and effectively the ones that can no longer be used.

The aim of the present invention is to provide a device for capturing insects which solves the problems linked to replacements of panels for capturing insects of the known type.

Within this aim, an object of the present invention is to provide a device for capturing insects which is easy to use.

Another object of the present invention is to provide a device for capturing insects which can be used in apparatuses using fly-killing lamps so as to limit the labor required for their maintenance.

Another object of the present invention is to provide a device for capturing insects which can be used in apparatuses using fly-killing lamps and produces cost reductions related to the management of these apparatuses.

Another object to the present invention is to provide a device for capturing insects which can be manufactured with known systems and technologies.

This aim and these and other objects, which will become better apparent hereinafter, are achieved by a device for capturing insects of the type that works by adhesion to a sticky surface, characterized in that it comprises a multilayer pack of films, the two end films of which are respectively a first one suitable to be arranged in contact with a support and a second one provided with a surface which is free to the environment, each film of said multilayer pack comprising, on the side directed toward said second end film, a sticky surface for capturing insects and, on the opposite side, a surface for weak adhesion to the sticky surface of a contiguous film, each of said films having, at at least one edge, a user grip portion which is at least partially free from contiguous films, said grip portion being suitable for peeling the end film that is directed toward the environment with respect to the rest of the multilayer pack.

Further characteristics and advantages of the invention will become better apparent from the following detailed description of a preferred but not exclusive embodiment thereof, illustrated by way of non-limiting example in the accompanying drawing, wherein:

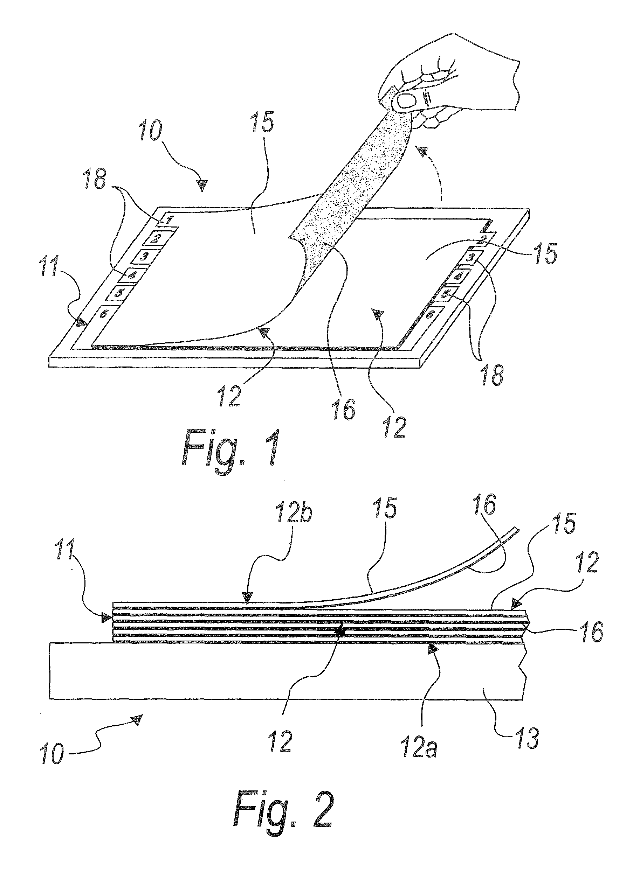

Figure 1 is a schematic perspective view of a device for capturing insects according to the invention;
Figure 2 is a schematic transverse sectional view of a portion of a device according to the invention, in which the dimensions of the thicknesses of the layers of film that are indicated have a purely descriptive function.

It is noted that anything found to be already known during the patenting process is understood not to be claimed and to be the subject of a disclaimer.

With reference to the figures, a device for capturing insects according to the invention is generally designated by the reference numeral 10.

The device 10 for capturing insects is of the type that captures by adhesion to a sticky surface and is adapted to be associated with an apparatus using a UVA-ray fly-killing lamp (not shown in the figures).

The device 10 comprises a multilayer pack 11 of films 12, which rests on a support 13, such as for example a panel made of plastic material.

The multilayer pack 11 of films 12 therefore has two end films, a first one 12a of which is arranged in contact with the support 13 while the second one 12b has a surface which is free to the environment.

Each film 12 of the multilayer pack 11 has, on the side directed toward the second end film 12b, a sticky surface 15 for capturing insects and, on the opposite side, a surface for weak adhesion 16 to the sticky surface 15 of a contiguous film 12.

The material that constitutes the weak adhesion surface is a silicone which allows easy separation from the surface to which it adheres.

Advantageously, pigment, such as for example lampblack, which at least partially shields from UVA rays is deposited on the weak adhesion surface 16 of each film 12.

Each film 12 has, in this embodiment, at each of its two of its parallel edges, a grip portion 18 for a user which is free from contiguous films 12.

The grip portion 18 is suitable for peeling the end film 12 that is directed toward the environment with respect to the rest of the multilayer pack 11.

In particular, all the grip portions 18 that correspond to similar edges of films 12 are constituted by tabs which protrude laterally from the corresponding film and are distributed along the same side of the multilayer pack 11 so that they are not completely superimposed on one another, in practice in an index-book arrangement.

The operation of the invention is as follows.

The panel with the multilayer pack 11 is placed in the suitable compartment provided in an apparatus provided with a UVA-ray fly-killing lamp.

When a film has lost its adhesive power, for example due to aging or due to the adhesion of a very large number of insects, the maintainer of the fly-killing lamp apparatus takes a flap of the end film that is directed toward the environment and peels it, separating it from the underlying film.

In this manner, a new film is ready for use very quickly.

Advantageously, the use of a pigment that shields from UV rays allows to protect for a longer time the films that lie below the end one directed toward the environment.

The fact of having film grip tabs distributed in an index-book arrangement facilitates considerably the work of the maintainer and allows to see the extent of the reserve of fly-killing films.

It should be noted that the fact of having grip flaps distributed on mutually opposite sides of the multilayer pack of film allows to produce a single large format of multilayer pack and divide said pack in half to provide smaller formats (each with grip tabs) to be associated with smaller fly-killing apparatuses.

In practice it has been found that the invention thus described solves the problems noted in known types of insect capturing device; in particular, the present invention provides an insect capturing device of the type that acts by adhesion to a sticky surface which allows to reduce inventory reserves of the known types of adhesive panel, since the adhesive surfaces are already in place.

The invention further allows to save on replacements of the panels and on maintenance times and methods.

In practice, the materials employed, so long as they are compatible with the specific use, as well as the dimensions, may be any according to requirements and to the state of the art.

The disclosures in Italian Utility Model Application No. PD2005U000072 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for capturing insects of the type that works by adhesion to a sticky surface, **characterized in that** it comprises a multilayer pack (11) of films (12), the two end films (12a, 12b) of which are respectively a first one (12a) suitable to be arranged in contact with a support (13) and a second one (12b) provided with a surface which is free to the environment, each film (12) of said multilayer pack (11) comprising, on the side directed toward said second end film (12b), a sticky surface (15) for capturing insects and, on the opposite side, a surface (16) for weak adhesion to the sticky surface (15) of a contiguous film (12), each of said films (12) having, at at least one edge, a user grip portion (18) which is at least partially free from contiguous films (12), said grip portion (18) being suitable for peeling the end film (12b) that is directed toward the environment with respect to the rest of the multilayer pack (11).

2. The device for capturing insects according to claim 1, **characterized in that** pigment which at least partially shields UV rays is deposited on said weak adhesion surface (16) of each of said films (12).

3. The device for capturing insects according to claim 2, **characterized in that** said pigment is lampblack.

4. The device for capturing insects according to one or more of the preceding claims, **characterized in that** the material that constitutes said weak adhesion surface (16) is a silicone.

5. The device for capturing insects according to one or more of the preceding claims, **characterized in that** said grip portions (18) are constituted by flaps which protrude laterally from the corresponding films (12) and are distributed along the same side of the multilayer pack (11) so that they are not completely mutually superimposed.

6. The device for capturing insects according to claim 5, **characterized in that** said protruding flaps protrude on at least one side of said multilayer pack (11) in an index-book distribution.

7. The device for capturing insects according to one or more of the preceding claims, **characterized in that** said multilayer pack (11) is arranged on a support (13) which is constituted by a panel made of plastic material.
